# EUROPEAN PATENT APPLICATION

(11) **EP 4 057 760 A1**
(43) Date of publication of application: **14.09.2022**
(21) Application number: 19951706.1
(22) Date of filing: 07.11.2019
(51) Int. Cl.: H04W 74/08

(54) **TERMINAL AND COMMUNICATION METHOD**

(71) Applicant: NTT DOCOMO, INC., Chiyoda-Ku Tokyo 100-6150 (JP)
(72) Inventor: OHARA, Tomoya, Tokyo 100-6150 (JP)
(74) Representative: Hoffmann Eitle
(86) International application number: PCT/JP2019/043776
(87) International publication number: WO 2021/090462

(57) **Abstract**

A terminal including: a transmission unit that transmits a first message and a second message used in a 2-step random access procedure, the first message being transmitted via a physical random access channel and the second message transmitted via a physical uplink shared channel; and a control unit that determines a power control to be applied to the first message and the second message, according to a control based on a prioritization rule of power allocation applied to the first message or the second message, wherein the transmission unit retransmits the first message and the second message by applying the determined power control to the first message and the second message.

## Description

### TECHNICAL FIELD

The present invention relates to a terminal and a communication method in a wireless communication system.

### BACKGROUND ART

In NR (New Radio) (also referred to as "5G"), which is a succeeding system of LTE (Long Term Evolution), a technique that satisfies large-capacity system, high-speed data transmission speed, low delay, simultaneous connection of multiple terminals, low cost, power saving, and the like as required conditions has been studied (for example, Non-Patent Document 1).

NR performs random access for synchronization establishment or scheduling request between a terminal and a base station as in LTE. There are two types of random access procedures: contention based random access (CBRA) and contention free random access (CFRA) (for example, Non-Patent Document 2).

### CITATION LIST

### Non-Patent Document

Non-Patent Document 1: 3GPP TS 38.300 V15.7.0 (2019-09)
Non-Patent Document 2: 3GPP TS 38.321 V15.7.0 (2019-09)

### SUMMARY OF THE INVENTION

### PROBLEM TO BE SOLVED BY THE INVENTION

In addition to the conventional 4-step random access procedure, a 2-step random access procedure using a MsgA and a MsgB has being considered in the contention based random access procedure of the NR wireless communication system. In the 2-step random access procedure, in a case where a PRACH (Physical Random Access Channel) of the MsgA and a PUSCH (Physical Uplink Shared Channel) that is a data part excluding a random access preamble of the MsgA are retransmitted, when a power ramping control similar to retransmitting the PRACH in the 4-step random access procedure is applied, the power ramping control related to the PUSCH may be inappropriate.

The present invention has been made in view of the above points, and the object thereof is to control electrical power at the time of retransmission during the 2-step random access procedure in the wireless communication system.

### MEANS FOR SOLVING PROBLEM

According to the disclosed technique, there is provided a terminal, the terminal including:
a transmission unit that transmits a first message and a second message used in a 2-step random access procedure, the first message being transmitted via a physical random access channel and the second message being transmitted via a physical uplink shared channel; and
a control unit that determines a power control to be applied to the first message and the second message, according to a control based on a prioritization rule of power allocation applied to the first message or the second message,
wherein the transmission unit retransmits the first message and the second message by applying the determined power control to the first message and the second message.

### EFFECT OF THE INVENTION

According to the disclosed technology, it is possible to control the power at the time of retransmission during the 2-step random access procedure in the wireless communication system.

### BRIEF DESCRIPTION OF THE DRAWINGS

Fig. 1 is a diagram illustrating a configuration example of a wireless communication system according to an embodiment of the present invention.
Fig. 2 is a sequence diagram for explaining an example of the 4-step random access procedure.
Fig. 3 is a sequence diagram for explaining an example of the 2-step random access procedure.
Fig. 4 is a flowchart illustrating an example (1) of the 2-step random access procedure according to the embodiment of the present invention.
Fig. 5 is a flowchart illustrating an example (2) of the 2-step random access procedure according to the embodiment of the present invention.
Fig. 6 is a diagram illustrating an example (1) of power ramping in the 2-step random access procedure according to the embodiment of the present invention.
Fig. 7 is a diagram illustrating an example (2) of power ramping in the 2-step random access procedure according to the embodiment of the present invention.
Fig. 8 is a diagram illustrating an example (3) of power ramping in the 2-step random access procedure according to the embodiment of the present invention.
Fig. 9 is a diagram illustrating an example (4) of power ramping in the 2-step random access procedure according to the embodiment of the present invention.
Fig. 10 is a flowchart illustrating an example (3) of the 2-step random access procedure according to the embodiment of the present invention.
Fig. 11 is a flowchart illustrating an example (4) of the 2-step random access procedure according to the embodiment of the present invention.
Fig. 12 is a flowchart illustrating an example (5) of the 2-step random access procedure according to the embodiment of the present invention.
Fig. 13 is a flowchart illustrating an example (6) of the 2-step random access procedure according to the embodiment of the present invention.
Fig. 14 is a diagram illustrating an example of a functional configuration of a base station 10 according to the embodiment of the present invention.
Fig. 15 is a diagram illustrating an example of a functional configuration of a terminal 20 according to the embodiment of the present invention.
Fig. 16 is a diagram illustrating an example of a hardware configuration of the base station 10 or the terminal 20 according to the embodiment of the present invention.

### MODE(S) FOR CARRYING OUT THE INVENTION

Hereinafter, an embodiment of the present invention will be described with reference to the drawings. Note that the embodiment described below is just an example, and that the embodiment to which the present invention is applied is not limited to the following embodiments.

The existing technology is appropriately used for an operation of the wireless communication system according to the embodiment of the present invention. However, the existing technology is, for example, existing LTE, but is not limited to the existing LTE. In addition, the term "LTE" used in the specification shall have a broad meaning including LTE-Advanced and a scheme of after LTE-Advanced (for example, NR) unless otherwise specified.

In addition, in the embodiments of the present invention described below, terms used in the existing LTE: SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel) and the like are used. This is for convenience of description, and signals and functions similar to these terms may be referred to as other names. Further, the above-mentioned terms in the NR correspond to NR-SS, NR-PSS, NR-SSS, NR-PBCH, NR-PRACH and the like. However, even if a signal is used for the NR, the signal is not necessarily specified as "NR-".

In addition, in the embodiments of the present invention, the duplex system may be a TDD (Time Division Duplex) system, an FDD (Frequency Division Duplex) system, or other system(for example, Flexible Duplex etc.).

In addition, in the embodiments of the present invention, "configuring" a wireless parameter and the like means that a predetermined value may be pre-configured, or that the wireless parameter indicated from a base station 10 or a terminal 20 may be configured.

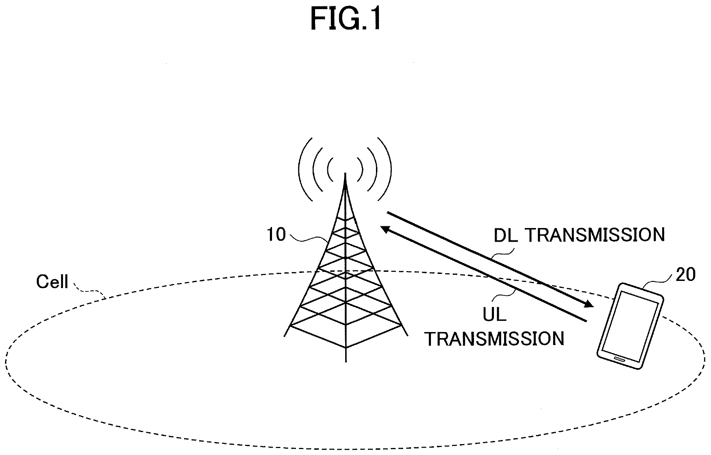

Fig. 1 is a diagram illustrating a configuration example of a wireless communication system according to an embodiment of the present invention. As shown in Fig. 1, the wireless communication system according to the embodiment of the present invention includes a base station 10 and a terminal 20. Fig. 1 illustrates one base station 10 and one terminal 20, however, this is just an example, and a plurality of base stations 10 and terminals 20 may be provided.

The base station 10 is a communication unit that provides one or more cells and performs wireless communication with the terminal 20. Physical resources of the radio signal are defined in a time domain and a frequency domain, and the time domain may be defined by the number of OFDM (Orthogonal Frequency Division Multiplexing) symbols, and the frequency domain may be defined by the number of sub-carriers or the number of resource blocks. The base station 10 transmits a synchronization signal and system information to the terminal 20. The synchronization signal is, for example, the NR-PSS and the NR-SSS. The system information is transmitted via the NR-PBCH, for example, and is also referred to as broadcasting information. As shown in Fig. 1, the base station 10 transmits a control signal or data to the terminal 20 on a DL (Downlink), and receives the control signal or data from the terminal 20 on an UL (Uplink). Both the base station 10 and the terminal 20 can perform beamforming to transmit and receive signals. Further, both the base station 10 and the terminal 20 can apply communication according to MIMO (Multiple Input Multiple Output) to the DL or the UL. In addition, both the base station 10 and the terminal 20 may communicate via a secondary cell (SCell: Secondary Cell) and a primary cell (PCell: Primary Cell) by CA (Carrier Aggregation). Moreover, the terminal 20 may communicate via a primary cell of the base station 10 and a primary secondary cell (PSCell: Primary Secondary Cell) of another base station 10 by DC (Dual Connectivity).

The terminal 20 is a communication unit having a wireless communication function such as a smartphone, a mobile phone, a tablet, a wearable terminal, and a communication module for M2M (Machine-to-Machine) . As shown in Fig. 1, the terminal 20 receives the control signal or data from the base station 10 on the DL and transmits the control signal or data to the base station 10 on the UL, thereby using various types of communication services provided by the wireless communication system.

In a random access procedure performed for synchronization establishment or a scheduling request between the terminal 20 and the base station 10, for example, the terminal 20 transmits, as a UL signal, a random access preamble or a UE (User Equipment) identifier to the base station 10, and the base station 10 transmits, as a DL signal, a random access response and information for contention resolution to the terminal 20.

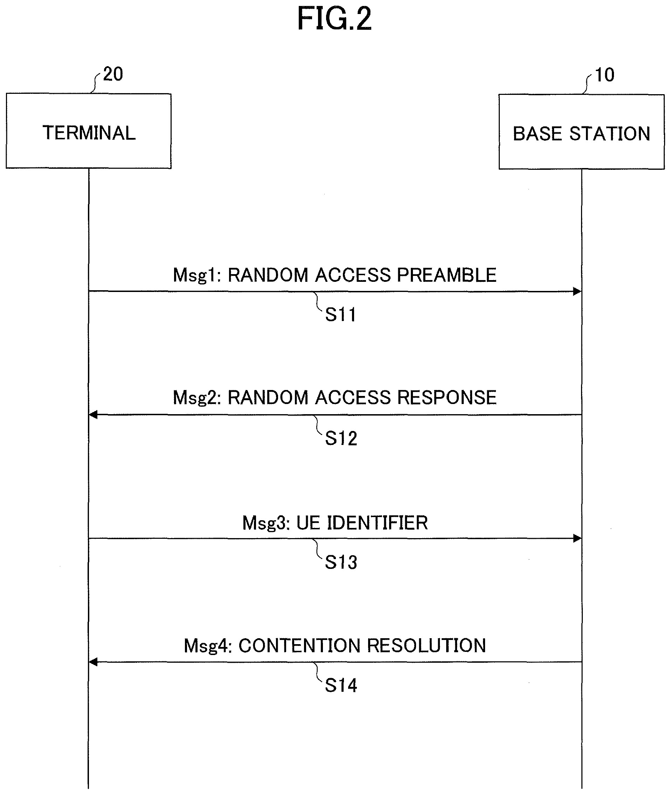

Fig. 2 is a sequence diagram for explaining an example of the 4-step random access procedure. An example of the random access procedure shown in Fig. 2 is a contention based 4-step random access procedure. In step S11, the terminal 20 transmits a random access preamble as a Msg1 to the base station 10. Then, the base station 10 transmits a random access response as a Msg2 to the terminal 20 (S12) . Then, the terminal 20 transmits the UE identifier as a Msg3 to the base station 10 (S13). Then, the base station 10 transmits information for performing contention resolution as a Msg4 to the terminal 20. If the contention resolution is successful, the random access procedure is successfully completed.

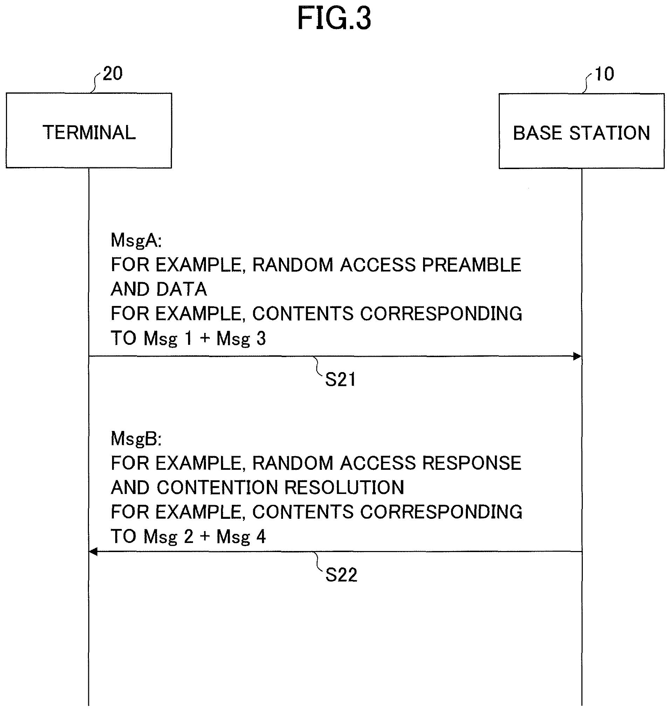

Fig. 3 is a sequence diagram for explaining an example of the 2-step random access procedure. An example of the random access procedure shown in Fig. 3 is a contention based 2-step random access procedure. The 2-step random access procedure is considered to complete the random access procedure in a short duration. In step S21, the terminal 20 transmits, as a MsgA, a random access preamble via the PRACH and data via the PUSCH to the base station 10. For example, contents corresponding to the Msg1 and the Msg3 in the 4-step random access procedure may be transmitted via the PUSCH. Then, the base station 10 transmits, as a MsgB, a random access response and information for contention resolution to the terminal 20 (S22) . For example, the MsgB may include contents corresponding to the Msg2 and the Msg4 in the 4-step random access procedure. If the contention resolution is successful, the random access procedure is successfully completed. By adopting the 2-step random access procedure, effects such as low delay and reduction of power consumption are expected.

Note that, in the 4-step random access procedure and the 2-step random access procedure, for example, by assigning the random access preamble from the base station 10 to the terminal 20, it is also possible to perform contention free random access.

Details of the MsgA in the 2-step random access procedure are being studied. For example, the MsgA is composed of the random access preamble and the PUSCH. It is assumed that the random access preamble and the PUSCH are not integrated resources at least in the physical layer. For example, it is assumed that the random access preamble separated as a physical resource and the PUSCH are defined as the MsgA.

Namely, the MsgA-PUSCH transmission opportunity (MsgA PUSCH occasion) may be defined as one MsgA-PUSCH resource. Similarly, the MsgA-PRACH transmission opportunity (MsgA PRACH occasion) may be defined as a resource for transmitting one MsgA-preamble. Hereinafter, the "MsgA-PUSCH transmission opportunity" is also referred to as "MsgA-PO," and the "MsgA-PRACH transmission opportunity" is also referred to as "MsgA-RO".

It has been considered to establish a correspondence relationship between the MsgA-PUSCH and the MsgA-PRACH. The correspondence relationship may be, for example, on MsgA-PRACH for one MsgA-PUSCH, may be one MsgA-PRACH for multiple MsgA-PUSCHs, or may be multiple MsgA-PRACHs for multiple MsgA-PUSCHs. The terminal 20 identifies the MsgA-PRACH and the MsgA-PUSCH and transmits the MsgA to the base station 10.

Regarding a power ramping counter at the time of retransmission, it is specified as the following 1) and 2) in the conventional 4-step random access procedure.

1) When the PRACH (Msg1) has not been transmitted according to a prioritization rule of power allocation, layer 1 indicates, to an upper layer, that the power ramping counter is to be suspended.
2) When the PRACH (Msg1) has been transmitted with reduced power according to the prioritization rule of power allocation, the layer 1 can indicate, to the upper layer, that the power ramping counter is to be suspended.

In the 2-step random access procedure, because the terminal 20 transmits the MsgA-PRACH (preamble) and the MsgA-PUSCH without waiting for a response to the preamble from the base station 10, regarding the influence on the power ramping counter according to the prioritization rule of power allocation, the case of the MsgA-PUSCH needs to be considered as well. By appropriately executing the control related to the power ramping counter at the time of retransmission of the MsgA-PUSCH, the success rate in the 2-step random access procedure and the amount of interference due to the MsgA can be optimized. Note that a power ramping counter of the MsgA-PUSCH and a power ramping counter of the MsgA-PRACH may be the same or may be configured separately.

The power ramping counter of the MsgA-PUSCH may be controlled according to the application of the prioritization rule of power allocation of the MsgA-PRACH in the 2-step random access procedure.

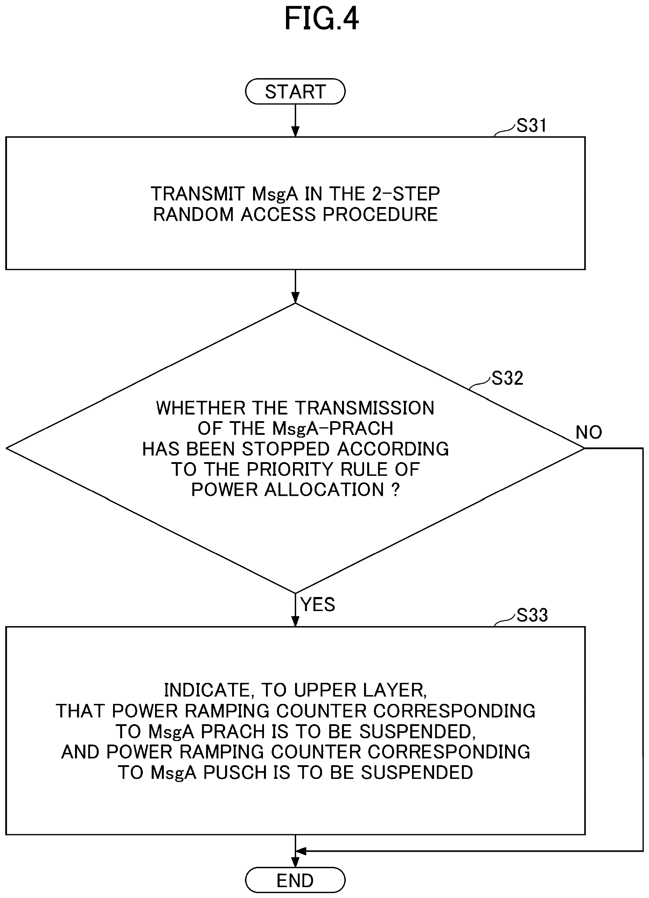

Fig. 4 is a flowchart illustrating an example (1) of the 2-step random access procedure according to the embodiment of the present invention. In step S31, the terminal 20 transmits a MsgA in the 2-step random access procedure. Then, the terminal 20 determines whether or not the transmission of the MsgA-PRACH has been stopped according to the prioritization rule of power allocation (S32). When the transmission of the MsgA-PRACH has been stopped (YES in S32), the process proceeds to step S33, and when the MsgA-PRACH has been transmitted (NO in S32), the process ends the flow. In step S33, the layer 1 indicates, to the upper layer, that the power ramping counter corresponding to the MsgA-PRACH is to be suspended and the power ramping counter corresponding to the MsgA-PUSCH is to be suspended.

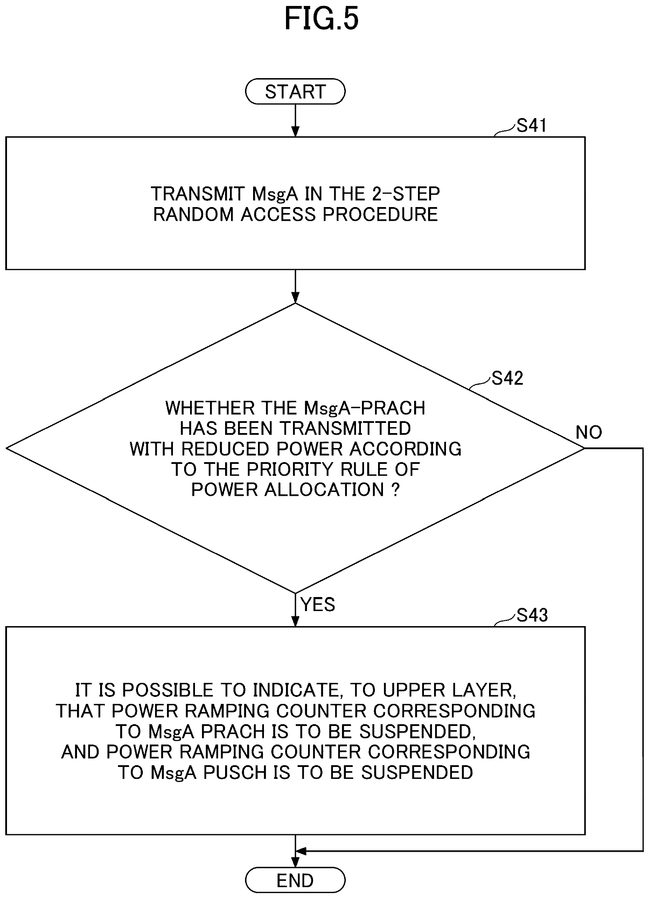

Fig. 5 is a flowchart illustrating an example (2) of the 2-step random access procedure according to the embodiment of the present invention. In step S41, the terminal 20 transmits a MsgA in the 2-step random access procedure. Then, the terminal 20 determines whether or not the MsgA-PRACH has been transmitted with reduced power according to the prioritization rule of power allocation (S42) . When the MsgA-PRACH has been transmitted with the reduced power (YES in S42), the process proceeds to step S43, and when the MsgA-PRACH has not been transmitted with the reduced power (NO in S42), the process ends the flow. In step S43, the layer 1 can indicate, to the upper layer, that the power ramping counter corresponding to the MsgA-PRACH is to be suspended and the power ramping counter corresponding to the MsgA-PUSCH is to be suspended.

Note that the procedures shown in Figs. 4 and 5 may be applied when the power ramping counters are separately defined for the MsgA-PRACH and the MsgA-PUSCH or when the power ramping counter is defined as the same counter for the MsgA-PRACH and MsgA-PUSCH. That is, when separate power ramping counters are defined for the MsgA-PRACH and the MsgA-PUSCH, both counters are to be suspended at the same time, and when the same power ramping counter is defined for the MsgA-PRACH and the MsgA-PUSCH, the counter may be suspended.

Therefore, the suspension of the power ramping counter (s) can be similarly applied to the entire MsgA, that is, the MsgA-PRACH and the MsgA-PUSCH by using the procedures shown in Figs. 4 and 5.

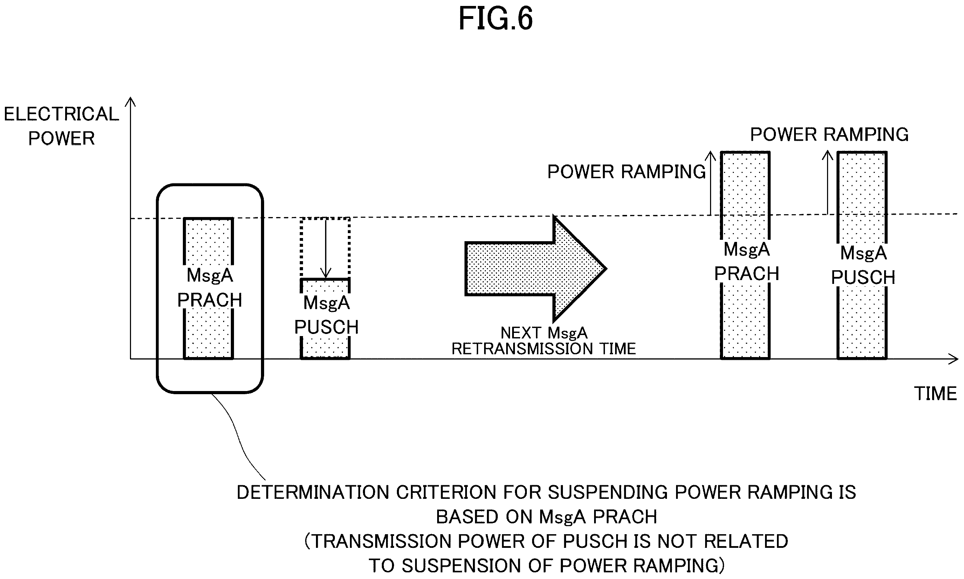

Fig. 6 is a diagram illustrating an example (1) of power ramping in the 2-step random access procedure according to the embodiment of the present invention. Fig. 6 shows an example in which the MsgA-PRACH is normally transmitted and the MsgA-PUSCH is transmitted with reduced power. As shown in Fig. 6, because the MsgA-PRACH has been transmitted normally and has not been controlled by the prioritization rule of power allocation, the suspension of the power ramping counter is not applied, and as shown in Fig. 6 at the time of subsequent MsgA retransmission, the MsgA-PRACH and the MsgA-PUSCH are transmitted with a power to which the power ramping is applied.

Further, as shown in Fig. 6, although the MsgA-PUSCH is transmitted with the reduced power according to the prioritization rule of power allocation, the determination criterion for the suspension of power ramping is based on the MsgA-PRACH, thus the transmission power of the MsgA-PUSCH is not related to the suspension of power ramping.

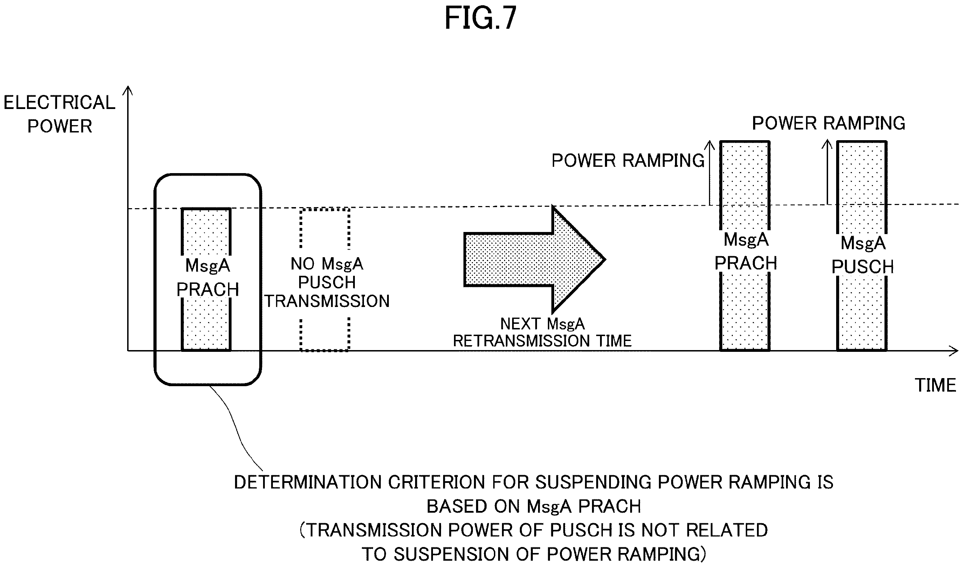

Fig. 7 is a diagram illustrating an example (2) of power ramping in the 2-step random access procedure according to the embodiment of the present invention. Fig. 7 shows an example in which the MsgA-PRACH is normally transmitted and the MsgA-PUSCH is not transmitted. As shown in Fig. 7, because the MsgA-PRACH has been transmitted normally and has not been controlled by the prioritization rule of power allocation, the suspension of the power ramping counter is not applied, and as shown in Fig. 7 at the time of subsequent MsgA retransmission, the MsgA-PRACH and the MsgA-PUSCH are transmitted with a power to which the power ramping is applied.

Further, as shown in Fig. 7, although the MsgA-PUSCH is not transmitted according to the prioritization rule of power allocation, the determination criterion for the suspension of power ramping is based on the MsgA-PRACH, thus the transmission power of the MsgA-PUSCH is not related to the suspension of power ramping.

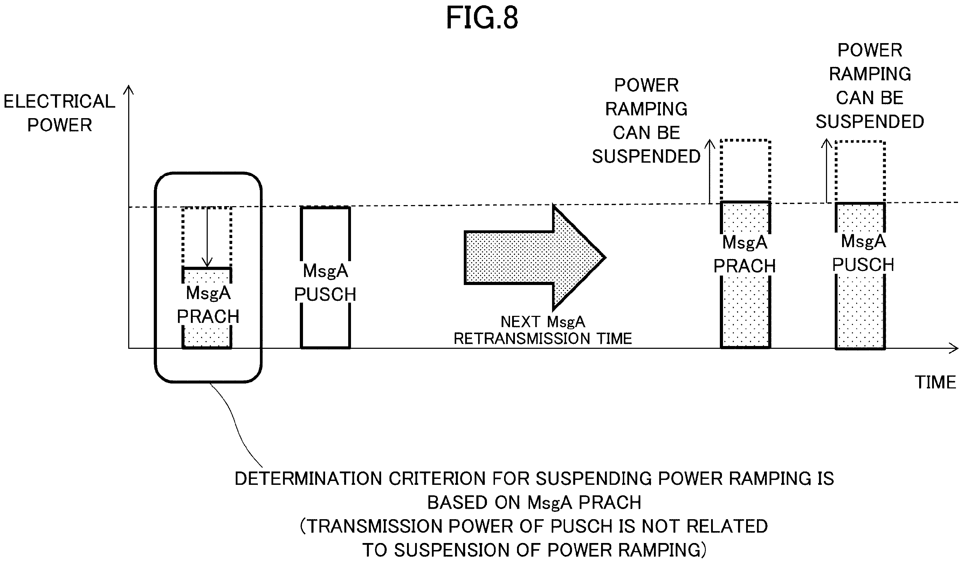

Fig. 8 is a diagram illustrating an example (3) of power ramping in the 2-step random access procedure according to an embodiment of the present invention. Fig. 8 shows an example in which the MsgA-PRACH is transmitted with reduced power and the MsgA-PUSCH is normally transmitted. As shown in Fig. 8, because the MsgA-PRACH has been transmitted with the reduced power according to the prioritization rule of power allocation, the suspension of the power ramping counter can be applied. When the suspension is applied at the time of subsequent MsgA retransmission, the MsgA-PRACH and the MsgA-PUSCH are transmitted with a power to which the power ramping is not applied, and when the suspension is not applied, the MsgA-PRACH and the MsgA-PUSCH are transmitted with a power to which the power ramping is applied.

Further, as shown in Fig. 8, although the MsgA-PUSCH is normally transmitted, the determination criterion for the suspension of power ramping is based on the MsgA-PRACH, thus the transmission power of the MsgA-PUSCH is not related to the suspension of power ramping.

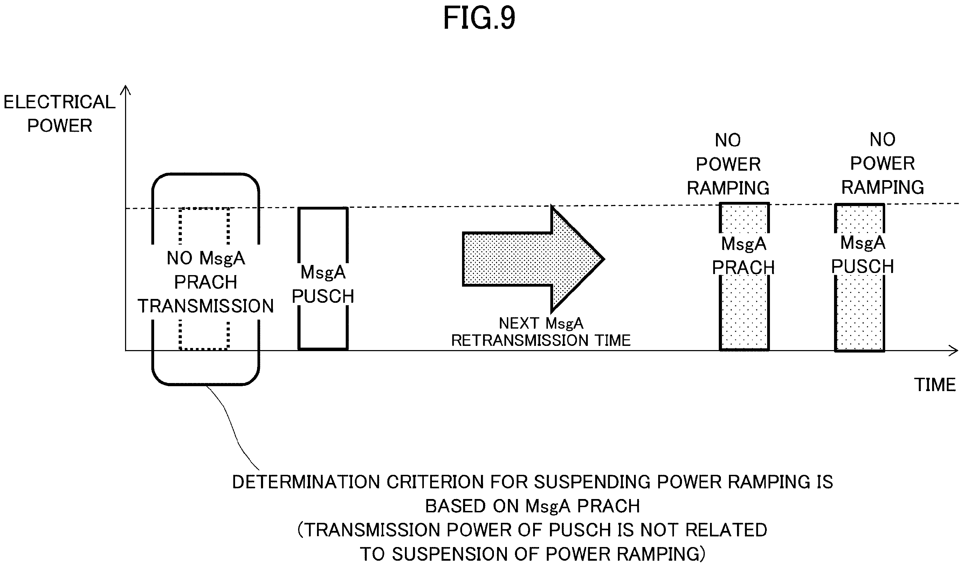

Fig. 9 is a diagram illustrating an example (4) of power ramping in the 2-step random access procedure according to an embodiment of the present invention. Fig. 9 shows an example in which the MsgA-PRACH is not transmitted and the MsgA-PUSCH is normally transmitted. As shown in Fig. 9, because the MsgA-PRACH has not been transmitted according to the prioritization rule of power allocation, the suspension of the power ramping counter may be applied. At the time of subsequent MsgA retransmission, the MsgA-PRACH and the MsgA-PUSCH are transmitted with a power to which the power ramping is not applied.

Further, as shown in Fig. 9, although the MsgA-PUSCH is normally transmitted, the determination criterion for the suspension of power ramping is based on the MsgA-PRACH, thus the transmission power of the MsgA-PUSCH is not related to the suspension of power ramping.

Note that, in Fig. 6, Fig. 7, Fig. 8 or Fig. 9, the transmission power values before applying the prioritization rule of power allocation to the MsgA-PRACH and the MsgA-PUSCH are shown as the same value, but the transmission power values before applying the prioritization rule of power allocation to MsgA-PRACH and the MsgA-PUSCH may be different.

In addition, the suspension of power ramping of the MsgA may be determined based only on the control based on the prioritization rule of power allocation for the MsgA-PRACH, or the suspension of power ramping of the MsgA may be determined based only on the control based on the prioritization rule of power allocation for the MsgA-PUSCH, or the suspension of power ramping of the MsgA may be determined based on the combination of the control based on the prioritization rule of power allocation for the MsgA-PRACH and the control based on the prioritization rule of power allocation for the MsgA-PUSCH.

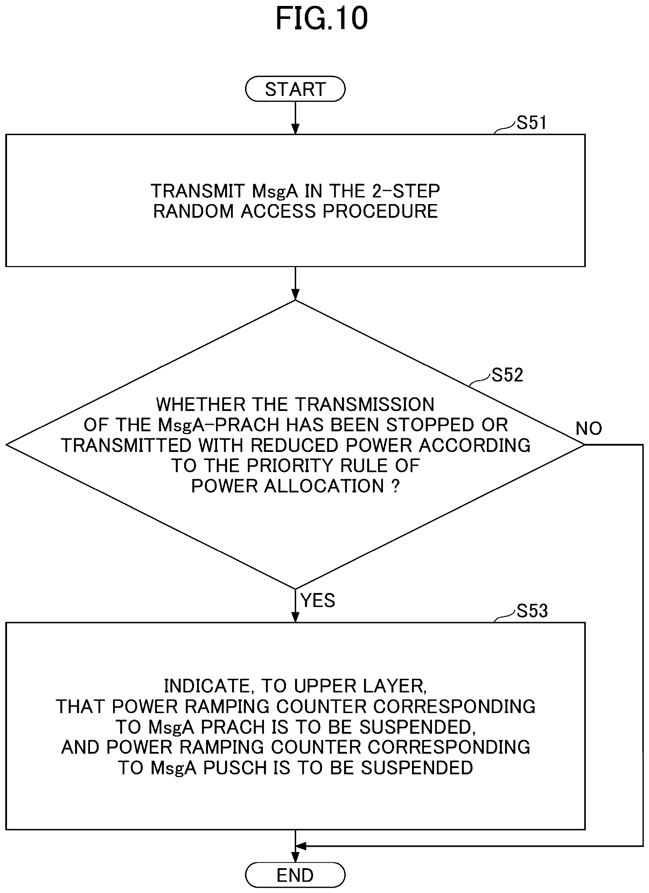

Fig. 10 is a flowchart illustrating an example (3) of the 2-step random access procedure according to an embodiment of the present invention. In step S51, the terminal 20 transmits a MsgA in the 2-step random access procedure. Then, the terminal 20 determines whether or not the transmission of the MsgA-PRACH has been stopped or has been transmitted with reduced power according to the prioritization rule of power allocation (S52). When the transmission of the MsgA-PRACH has been stopped or transmitted with reduced power (YES in S52), the process proceeds to step S53, and when the transmission of the MsgA-PRACH has not been stopped and has not been transmitted with reduced power (NO in S52), the process ends the flow. In step S53, the layer 1 indicates, to the upper layer, that the power ramping counter corresponding to the MsgA-PRACH is to be suspended and the power ramping counter corresponding to the MsgA-PUSCH is to be suspended. Note that when the MsgA-PRACH has been transmitted with the reduced power in step S52, the layer 1 may be able to indicate, to the upper layer, in step S53, that the power ramping counter corresponding to the MsgA-PRACH is to be suspended and the power ramping counter corresponding to the MsgA-PUSCH is to be suspended.

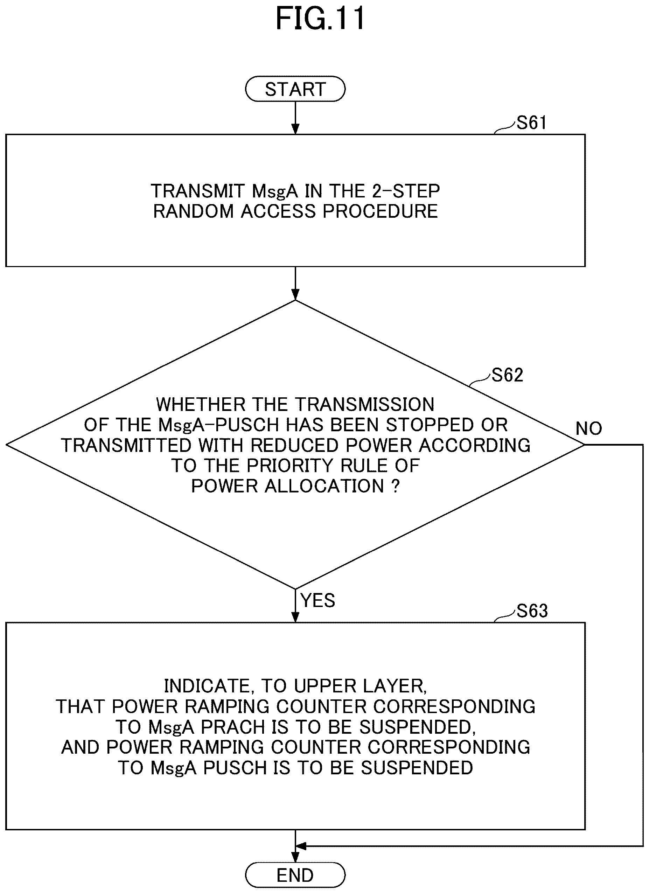

Fig. 11 is a flowchart illustrating an example (4) of the 2-step random access procedure according to an embodiment of the present invention. In step S61, the terminal 20 transmits a MsgA in the 2-step random access procedure. Then, the terminal 20 determines whether or not the transmission of the MsgA-PUSCH has been stopped or transmitted with reduced power according to the prioritization rule of power allocation (S62) . When the transmission of the MsgA-PUSCH has been stopped or transmitted with the reduced power (YES in S62), the process proceeds to step S63, and when the transmission of the MsgA-PUSCH has not been stopped and has not been transmitted with the reduced power (NO in S62), the process ends the flow. In step S63, the layer 1 indicates, to the upper layer, that the power ramping counter corresponding to the MsgA-PRACH is to be suspended and the power ramping counter corresponding to MsgA-PUSCH is to be suspended. Note that when the MsgA-PUSCH has been transmitted with the reduced power in step S62, the layer 1 may be able to indicate, to the upper layer, in step S63, that the power ramping counter corresponding to the MsgA-PRACH is to be suspended and the power ramping counter corresponding to the MsgA-PUSCH is to be suspended.

Information indicating which of the procedures shown in Fig. 10 or 11 is to be selected may be indicated by the base station 10 to the terminal 20, or a determination criterion for which of the procedures is selected may be defined. Further, for example, when at least one of the MsgA-PRACH and the MsgA-PUSCH has been stopped in transmission or has been transmitted with the reduced power according to the prioritization rule of power allocation, the layer 1 may be able to indicate, to the upper layer, that the power ramping counter corresponding to the MsgA-PRACH is to be suspended and the power ramping counter corresponding to the MsgA-PUSCH is to be suspended.

In addition, for example, when both the MsgA-PRACH or the MsgA-PUSCH have been stopped in transmission or have been transmitted with the reduced power according to the prioritization rule of power allocation, the layer 1 may be able to indicate, to the upper layer, that the power ramping counter corresponding to the MsgA-PRACH is to be suspended and the power ramping counter corresponding to the MsgA-PUSCH is to be suspended.

Note that the procedures shown in Figs. 10 and 11 may be applied when the power ramping counters are separately defined for the MsgA-PRACH and the MsgA-PUSCH or when the power ramping counter is defined as the same counter for the MsgA-PRACH and the MsgA-PUSCH. That is, when separate power ramping counters are defined for the MsgA-PRACH and the MsgA-PUSCH, both counters are to be suspended at the same time, and when the same power ramping counter is defined for the MsgA-PRACH and the MsgA-PUSCH, the counter may be suspended and may be referred to as power ramping counter of the MsgA.

Therefore, by the procedures shown in Figs. 10 and 11, the suspension of the power ramping counter can be similarly applied to the entire MsgA, that is, the MsgA-PRACH and the MsgA-PUSCH.

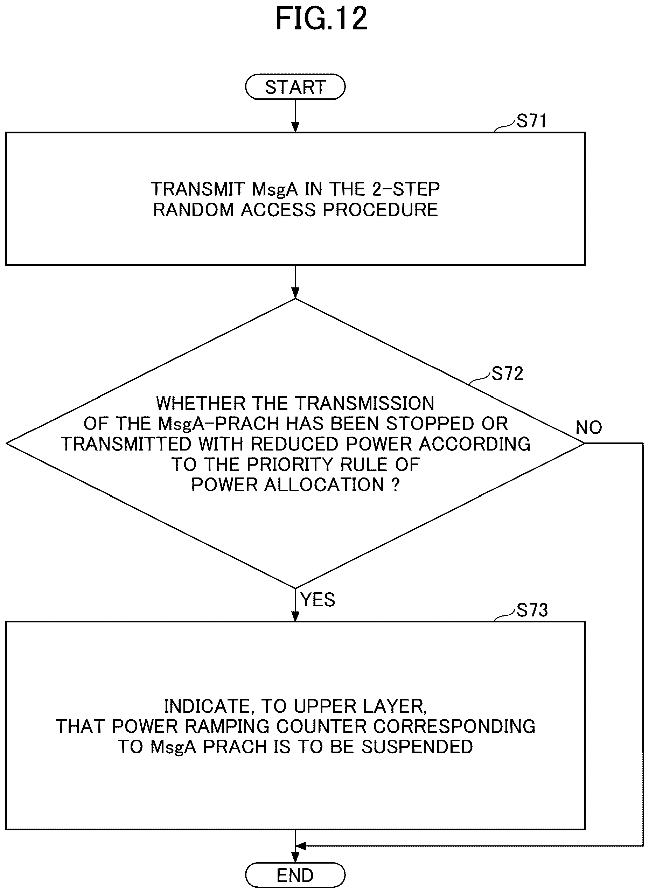

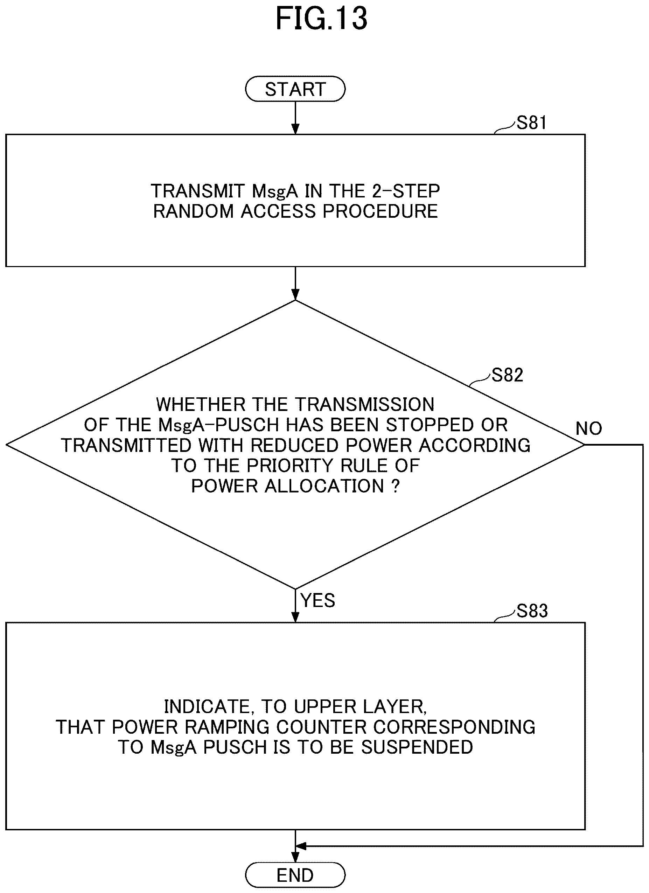

Further, when the power ramping counters are separately defined for the MsgA-PRACH and the MsgA-PUSCH: the determination regarding the suspension of the power ramping counter of the MsgA-PRACH based on the control based on the prioritization rule of power allocation for the MsgA-PRACH; and the determination regarding the suspension of the power ramping counter of the MsgA-PUSCH based on the control based on the prioritization rule of power allocation for the MsgA-PUSCH, may be performed independently. That is, the procedures shown in Fig. 12 or 13 may be performed independently.

Fig. 12 is a flowchart illustrating an example (5) of the 2-step random access procedure according to an embodiment of the present invention. In step S71, the terminal 20 transmits a MsgA in the 2-step random access procedure. Then, the terminal 20 determines whether or not the transmission of the MsgA-PRACH has been stopped or transmitted with reduced power according to the prioritization rule of power allocation (S72) . When the transmission of the MsgA-PRACH has been stopped or transmitted with the reduced power (YES in S72), the process proceeds to step S73, and when the transmission of the MsgA-PRACH has not been stopped and has not been transmitted with the reduced power (NO in S72), the process ends the flow. In step S73, the layer 1 indicates, to the upper layer, that the power ramping counter corresponding to the MsgA-PRACH is to be suspended. Note that when the MsgA-PRACH has been transmitted with the reduced power in step S72, the layer 1 may be able to indicate, to the upper layer, in step S73, that the power ramping counter corresponding to the MsgA-PRACH is to be suspended.

Fig. 13 is a flowchart illustrating an example (6) of the 2-step random access procedure according to an embodiment of the present invention. In step S81, the terminal 20 transmits a MsgA in the 2-step random access procedure. Then, the terminal 20 determines whether or not the transmission of the MsgA-PUSCH has been stopped or transmitted with reduced power according to the prioritization rule of power allocation (S82) . When the transmission of the MsgA-PUSCH has been stopped or transmitted with the reduced power (YES in S82), the process proceeds to step S83, and when the transmission of the MsgA-PUSCH has not been stopped and has not been transmitted with the reduced power (NO in S82), the process ends the flow. In step S83, the layer 1 indicates, to the upper layer, that the power ramping counter corresponding to the MsgA-PUSCH is to be suspended. Note that when the MsgA-PUSCH has been transmitted with the reduced power in step S82, the layer 1 may be able to indicate, to the upper layer, in step S83, that the power ramping counter corresponding to the MsgA-PUSCH is to be suspended.

For example, when the MsgA-PRACH has not been transmitted and the MsgA-PUSCH has not been transmitted according to the prioritization rule of power allocation, the suspension of power ramping for the MsgA-PRACH and the suspension of power ramping for the MsgA-PUSCH are indicated to the upper layer independently. Further, for example, when the MsgA-PRACH has not been transmitted according to the prioritization rule of power allocation and the MsgA-PUSCH has been transmitted normally, only the suspension of power ramping for the MsgA-PRACH is indicated to the upper layer. Further, for example, when the MsgA-PRACH has been transmitted normally and the MsgA-PUSCH has not been transmitted according to the prioritization rule of power allocation, only the suspension of power ramping for the MsgA-PUSCH is indicated to the upper layer.

According to the above-described embodiments, the terminal 20 performs the suspension of the power ramping counter for the MsgA according to the control based on the prioritization rule of power allocation at the time of retransmission during the 2-step random access procedure, and thus the success rate in the 2-step random access procedure and the amount of interference due to the MsgA can be optimized.

Namely, in the wireless communication system, the power at the time of retransmission during the 2-step random access procedure can be controlled.

### (Device configuration)

Next, a functional configuration example of the base station 10 and the terminal 20 that perform the processes and operations described above will be described. The base station 10 and the terminal 20 include a function for implementing the above-described embodiment. However, the base station 10 and the terminal 20 may each be provided with only a part of the functions in the embodiment.

### <Base station 10>

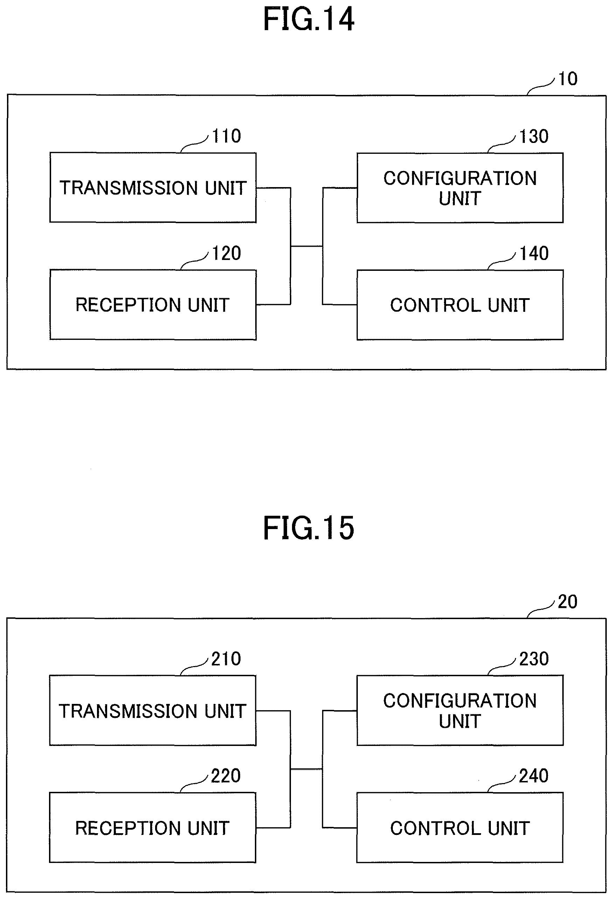

Fig. 14 is a diagram illustrating an example of a functional configuration of the base station 10 according to an embodiment of the present invention. As shown in Fig. 14, the base station 10 includes a transmission unit 110, a reception unit 120, a configuration unit 130, and a control unit 140. The functional configuration shown in Fig. 14 is just an example. The functional classifications and the names of the functional units are not particularly limited as long as the operations according to an embodiment of the present invention can be carried out.

The transmission unit 110 includes a function for generating a signal to be transmitted to the terminal 20 side and wirelessly transmitting the signal. Further, the transmission unit 110 transmits the inter-network node message to another network node. The reception unit 120 includes a function for receiving various signals transmitted from the terminal 20 and acquiring, for example, information of a higher layer from the received signals. Further, the transmission unit 110 includes a function for transmitting NR-PSS, NR-SSS, NR-PBCH, DL/UL control signals, and the like to the terminal 20. In addition, the reception unit 120 receives the inter-network node message from another network node.

The configuration unit 130 stores preconfigured configuration information and various configuration information to be transmitted to the terminal 20. The content of the configuration information is, for example, information related to configuration for 2-step random access.

The control unit 140 controls the 2-step random access as described in the embodiments. A functional unit related to signal transmission in the control unit 140 may be included in the transmission unit 110, and a functional unit related to signal reception in the control unit 140 may be included in the reception unit 120.

### <Terminal 20>

Fig. 15 is a diagram illustrating an example of a functional configuration of the terminal 20 according to an embodiment of the present invention. As shown in Fig. 15, the terminal 20 includes a transmission unit 210, a reception unit 220, a configuration unit 230, and a control unit 240. The functional configuration shown in Fig. 15 is just an example. The functional classifications and the names of the functional units are not particularly limited as long as the operations according to the present embodiment can be carried out.

The transmission unit 210 creates a transmission signal from transmission data and wirelessly transmits the transmission signal. The reception unit 220 wirelessly receives various signals and acquires a higher-layer signal from the received physical-layer signal. The reception unit 220 also has a function of receiving NR-PSS, NR-SSS, NR-PBCH, DL/UL/SL control signals, and the like transmitted from the base station 10. In addition, for example, the transmission unit 210 transmits, as D2D communication, a PSCCH (Physical Sidelink Control Channel), a PSSCH (Physical Sidelink Shared Channel), a PSDCH (Physical Sidelink Discovery Channel), a PSBCH (Physical Sidelink Broadcast Channel), and the like to another terminal 20 and the reception unit 220 receives the PSCCH, the PSSCH, the PSDCH, the PSBCH, and the like from the other terminal 20.

The configuration unit 230 stores various configuration information received from the base station 10 by using the reception unit 220. The configuration unit 230 also stores preconfigured configuration information. The content of the configuration information is, for example, the configuration for 2-step random access.

The control unit 240 controls the 2-step random access as described in the embodiments. A functional unit related to signal transmission in the control unit 240 may be included in the transmission unit 210, and a functional unit related to signal reception in the control unit 240 may be included in the reception unit 220.

### (Hardware configuration)

The block diagrams (Figs. 14 and 15) used in the description of the above embodiments show blocks in functional units. These functional blocks (components) are embodied by a combination of at least one of hardware and software. In addition, The method for embodying each functional block is not particularly limited. That is, each functional block may be embodied by using one unit which is physically or logically coupled, or may be embodied by using two or more units which are physically and/or logically separated and which are connected directly and/or indirectly (for example, in a wired and/or wireless manner) . The functional blocks may be embodied by combining the one unit or the plurality of units described above with software.

Functions include, but not limited to, judgment, decision, determination, calculation, computation, processing, derivation, investigation, search, confirmation, reception, transmission, output, access, resolution, selection, choice, establishment, comparison, assumption, expectation, deeming broadcasting, notifying, communicating, forwarding, configuring, reconfiguring, allocating, mapping, assigning, and the like. For example, a functional block (component) that functions for transmission is referred to as a transmitting unit or a transmitter. In any case, as described above, the embodying method is not particularly limited.

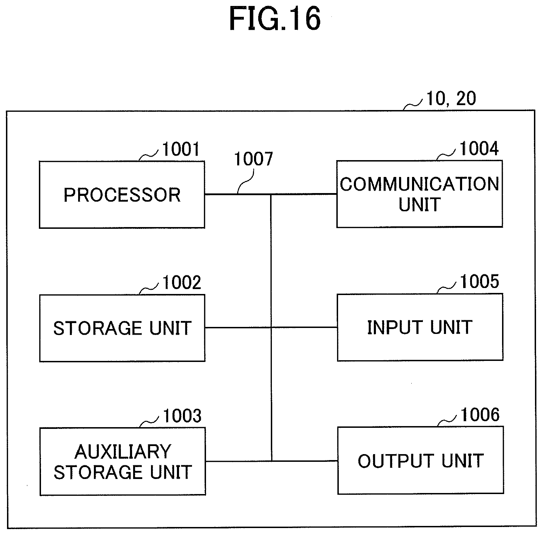

For example, the base station 10, the terminal 20 and the like according to an embodiment of the present disclosure may function as a computer that performs the process of the wireless communication method of the present disclosure. Fig. 16 is a diagram illustrating an example of a hardware configuration of the base station 10 and the terminal 20 according to an embodiment of the present disclosure. The base station 10 and the terminal 20 described above are physically configured as a computing device including a processor 1001, a storage unit 1002, an auxiliary storage unit 1003, a communication unit 1004, an input unit 1005, an output unit 1006, a bus 1007, and the like.

Note that in the following description, the term "unit" can be read as a circuit, device, unit, or the like. The hardware configurations of the base station 10 and the terminal 20 may be configured to include one or more units of these units shown in the figure, or may be configured not to include some devices.

Each function in the base station 10 and the terminal 20 is embodied so that by causing a predetermined software (program) to be loaded on hardware such as the processor 1001 and the storage unit 1002, the processor 1001 performs an arithmetic operation, controls communication by the communication unit 1004, or controls at least one of reading and writing of data in the storage unit 1002 and the auxiliary storage unit 1003.

The processor 1001 operates, for example, an operating system to control the entire computer. The processor 1001 may be configured by a central processing unit (CPU) including an interface with peripheral units, a control unit, an arithmetic unit, a register, and the like. For example, the control unit 140, the control unit 240, and the like described above may be embodied by the processor 1001.

Further, the processor 1001 reads a program (program code), software module, data, and the like from at least one of the auxiliary storage unit 1003 and the communication unit 1004 to the storage unit 1002, and performs various processes in accordance therewith. As the program, a program that causes a computer to perform at least a part of the operations described in the above-described embodiment is used. For example, the control unit 140 of the base station 10 shown in Fig. 14 may be embodied by a control program stored in the storage unit 1002 and operated by the processor 1001. Further, for example, the control unit 240 of the terminal 20 shown in Fig. 15 may be embodied by a control program stored in the storage unit 1002 and operated by the processor 1001. Although it has been described that the above-described various processes are performed by one processor 1001, the processes may be performed simultaneously or sequentially by two or more processors 1001. The processor 1001 may be implemented by one or more chips . Note that the program may be transmitted from a network via an electric communication line.

The storage unit 1002 is a computer-readable recording medium, and may be constituted, for example, by at least one of a ROM (Read Only Memory), an EPROM (Erasable Programmable ROM), an EEPROM (Electrically Erasable Programmable ROM), a RAM (Random Access Memory), and the like. The storage unit 1002 may be referred to as a register, a cache, a main memory (main storage unit), or the like. The storage unit 1002 can store an executable program (program code), a software module, and the like for implementing the communication method according to embodiments of the present disclosure.

The auxiliary storage unit 1003 is a computer-readable recording medium, and may be constituted, for example, an optical disk such as a CD-ROM (Compact Disc ROM), a hard disk drive, a flexible disk, a magneto-optical disk (for example, a compact disk, a digital versatile disk, a Blu-Ray (registered trademark) disk), a smart card, a flash memory (for example, a card, a stick, or a key drive), a floppy (registered trademark) disk, a magnetic strip and the like. The above-described storage medium may be, for example, a database including at least one of the storage unit 1002 and the auxiliary storage unit 1003, a server, or another suitable medium.

The communication unit 1004 is hardware (transmission/reception device) for performing communication between computers via at least one of a wired network and a wireless network, and is also referred to as, for example, a network device, a network controller, a network card, a communication module, or the like. The communication unit 1004 may be configured to include a high frequency switch, a duplexer, a filter, a frequency synthesizer, and the like in order to embody at least one of an FDD (Frequency Division Duplex) and a TDD (Time Division Duplex), for example. For example, a transmission/reception antenna, an amplifier unit, a transmission/reception unit, a transmission line interface, and the like may be embodied by the communication unit 1004. The transmission/reception unit may be implemented by physically or logically separated transmission unit and reception unit.

The input unit 1005 is an input device (for example, a keyboard, a mouse, a microphone, a switch, a button, a sensor, etc.) that receives an input from the outside. The output unit 1006 is an output device (for example, a display, a speaker, an LED lamp, etc.) that implements outputting to the outside. Note that the input unit 1005 and the output unit 1006 may be configured as an integrated body (for example, a touch panel) .

Further, the units such as the processor 1001 and the storage unit 1002 are connected by a bus 1007 for communicating information. The bus 1007 may be constituted by using a single bus, or may be constituted by using different buses between units.

Further, the base station 10 and the terminal 20 are configured to include hardware such as a microprocessor, a digital signal processor (DSP), an application specific integrated circuit (ASIC), a programmable logic device (PLD), and a field programmable gate array (FPGA), and thus the hardware may implement part or all of functional blocks. For example, the processor 1001 may be implemented using at least one of these hardware.

### (Summary of Embodiment)

As described above, according to an embodiment of the present invention, there is provided a terminal, the terminal including:
a transmission unit that transmits a first message and a second message used in a 2-step random access procedure, the first message being transmitted via a physical random access channel and the second message being transmitted via a physical uplink shared channel; and
a control unit that determines a power control to be applied to the first message and the second message, according to a control based on a prioritization rule of power allocation applied to the first message or the second message,
wherein the transmission unit retransmits the first message and the second message by applying the determined power control to the first message and the second message.

According to the above configuration, the terminal 20 performs the suspension of a power ramping counter (s) for a MsgA according to the control based on the prioritization rule of power allocation at the time of retransmission during the 2-step random access procedure, and thus the success rate in the 2-step random access procedure and the amount of interference due to the MsgA can be optimized. That is, in the wireless communication system, the power at the time of retransmission during the 2-step random access procedure can be controlled.

The control based on the prioritization rule of power allocation may be a control for stopping transmission or transmitting with reduced power, and the power control may be a control for suspending a power ramping counter. According to this configuration, the terminal 20 performs the suspension of the power ramping counter for a MsgA according to the control based on the prioritization rule of power allocation at the time of retransmission during the 2-step random access procedure, and thus the success rate in the 2-step random access procedure and the amount of interference due to the MsgA can be optimized.

The control unit may determine a power control to be applied to the first message and the second message, according to the control based on the prioritization rule of power allocation applied to the first message. According to this configuration, the terminal 20 can perform the suspension of the power ramping counter for the MsgA according to the control based on the prioritization rule of power allocation applied to the MsgA-PRACH at the time of retransmission during the 2-step random access procedure.

The control unit may determine a power control to be applied to the first message and the second message, according to the control based on the prioritization rule of power allocation applied to the second message. According to this configuration, the terminal 20 can perform the suspension of the power ramping counter for the MsgA according to the control based on the prioritization rule of power allocation applied to the MsgA-PUSCH at the time of retransmission during the 2-step random access procedure.

The control unit determines a power control to be applied to the first message according to the control based on the prioritization rule of power allocation applied to the first message, and determines a power control to be applied to the second message according to the control based on the prioritization rule of power allocation applied to the second message. According to this configuration, the terminal 20 can perform the suspension of power ramping counters for the each of the MsgA-PRACH and the MsgA-PUSCH according to the control based on the prioritization rule of power allocation applied to each of the MsgA-PRACH and the MsgA-PUSCH at the time of retransmission during the 2-step random access procedure.

In addition, according to an embodiment of the present invention, there is provided a communication method, the communication method including:
transmitting, by a terminal, a first message and a second message used in a 2-step random access procedure, the first message being transmitted via a physical random access channel and the second message being transmitted via a physical uplink shared channel; and
determining, by the terminal, a power control to be applied to the first message and the second message, according to a control based on a prioritization rule of power allocation applied to the first message or the second message,
wherein the transmitting includes retransmitting the first message and the second message by applying the determined power control to the first message and the second message.

According to the above configuration, the terminal 20 performs the suspension of a power ramping counter (s) for a MsgA according to the control based on the prioritization rule of power allocation at the time of retransmission during the 2-step random access procedure, and thus the success rate in the 2-step random access procedure and the amount of interference due to the MsgA can be optimized. That is, in the wireless communication system, the power at the time of retransmission during the 2-step random access procedure can be controlled.

### (Supplement to the Embodiment)

While the embodiments of the present invention have been described above, the disclosed inventions are not limited to such embodiments, and it could be understood by those skilled in the art that various modifications, corrections, alternatives, substitutions, and the like can be made thereto. While specific numerical examples have been used to facilitate understanding of the present invention, the numerical values are just an example and any appropriate values may be used, unless otherwise specified. Classifications of the items in the above description are not essential to the present invention, and details described in two or more items may be used in combination as necessary, or details described in one item may be applied to details described in another item (unless incompatible). The boundary of the functional unit or the processing unit in the functional block diagram does not necessarily correspond to boundary of a physical component. The operations of two or more functional units may be performed by a single physical component or the operation of a single functional unit may be performed by two or more physical components. Regarding the processing procedure described in the embodiments, the order of processing may be changed as long as there is no contradiction. For convenience of description of the process, the base station 10 and the terminal 20 have been described using the functional block diagrams, but such units may be embodied in hardware, software, or a combination thereof. Each of software operated by the processor of the base station 10 according to an embodiments of the present invention and software operated by the processor of the terminal 20 according to an embodiments of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

In addition, notification (indicating) of information is not limited to the aspect/embodiment described in the present disclosure, but may be performed using another manner. For example, the notification of information may be performed using physical layer signaling (for example, downlink control information (DCI) or uplink control information (UCI)), upper layer signaling (for example, radio resource control (RRC) signaling, medium access control (MAC) signaling, or broadcast information (master information block (MIB) or system information block (SIB))), other signals, or a combination thereof. Further, the RRC signaling may be referred to as an RRC message and may be, for example, an RRC connection setup message, an RRC connection reconfiguration message, or the like.

The respective aspects/embodiments described in the present disclosure may be applied to at least one of systems employing long term evolution (LTE), LTE-advanced (LTE-A), SUPER 3G, IMT-Advanced, 4th generation mobile communication system (4G), 5th generation mobile communication system (5G), future radio access (FRA), new radio (NR), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), or other appropriate systems, and next-generation systems to which these systems are extended. Further, a plurality of systems may be combined and the combined systems may be applied (for example, a combination of at least one of LTE and LTE-A and 5G) .

The order of the processing procedures, sequences, flowcharts, and the like of the respective aspects/embodiments described in the specification may be changed as long as there is no contradiction. For example, regarding the method described in the present disclosure, various steps are described in an exemplary order and are not limited to the described specific order.

The specific operation that is assumed to be performed by the base station 10 in the specification may be performed by an upper node thereof in some cases. In a network composed of one or more network nodes having the base station 10, it is obvious that various operations performed for communication with the terminal 20 are performed by the base station 10 and other network nodes other than the base station 10 (for example, an MME or an S-GW can be considered but the network nodes are not limited thereto) . The case where there is one other network node other than the base station 10 has been illustrated above; however, the other network node may be a combination of a plurality of other network nodes (for example, the MME and the S-GW) .

The information, signals, or the like described in the present disclosure may be output from an upper layer (or a lower layer) to a lower layer (or an upper layer). Input/output may be performed via a plurality of network nodes.

The information or the like that has been input and output may be stored in a specific location (for example, memory), or may be managed using a management table. The information that is input/output may be overwritten, updated, or added. The output information and the like may be deleted. The input information and the like may be transmitted to another unit.

The determination according to the present disclosure may be performed based on a value (0 or 1) represented by 1 bit, may be performed based on a Boolean value (Boolean: true or false), and may be performed by comparing numerical values (for example, comparison with a predetermined value).

Software, (regardless of whether or not it is referred to as software, firmware, middleware, microcode, hardware description language, or any other name,) should be broadly construed as instructions, instruction sets, code, code segments, program code, programs, sub-programs, software modules, application, software application, software package, routine, sub-routine, object, executable file, execution thread, procedure, function, and the like.

Further, software, instructions, information, or the like may be sent and received via a transmission medium. For example, when the software is sent from a website, a server, or other remote source by using at least one of a wired technology (a coaxial cable, an optical fiber cable, twisted pair, digital subscriber line (DSL), etc.) and/or wireless technology (infrared, microwave, etc.), at least one of these wired and wireless technologies is included within the definition of transmission medium.

The information, signals, and the like described in the present disclosure may be represented using any of a variety of different technologies. For example, data, instructions, commands, information, signals, bits, symbols, chips, and the like that may be mentioned throughout the above description may be represented by voltage, current, electromagnetic waves, magnetic fields or magnetic particles, optical fields or photons, or any combination of thereof.

Note that the terms described in the present disclosure and terms necessary for understanding the present disclosure may be replaced with terms having the same or similar meanings. For example, at least one of the channel and the symbol may be a signal (signaling). The signal may also be a message. In addition, a component carrier (CC) may be referred to as a carrier frequency, a cell, a frequency carrier, or the like.

The terms "system" and "network" used in the present disclosure are used interchangeably.

Further, the information, parameters, and the like described in the present disclosure may be represented by using an absolute value, may be represented by using a relative value from a predetermined value, or may be represented by using other corresponding information. For example, the radio resources may be those indicated by the index.

The names used for the above parameters are not limited names in any way. Further, mathematical formulas and the like using these parameters may differ from those explicitly disclosed in the present disclosure. Because various channels (for example, PUCCH, PDCCH, etc.) and information elements can be identified by any suitable name, the various names assigned to these various channels and information elements are not limited names in any way.

In the present disclosure, the terms such as "base station (BS)", "radio base station", "base station device", "fixed station", "NodeB", "eNodeB (eNB)", "gNodeB" (gNB)", "access point", "transmission point", "reception point", "transmission/reception point", "cell", "sector", "cell group", "carrier", "component carrier" and the like may be used interchangeably. The base station may be referred to as terms such as a macro cell, a small cell, a femto cell, a pico cell, and the like.

The base station can accommodate one or more (for example, three) cells. When the base station accommodates multiple cells, the entire coverage area of the base station can be divided into multiple smaller areas, each smaller area may also provide communication services by a base station subsystem (for example, a small indoor base station (RRH: Remote Radio Head)). The term "cell" or "sector" refers to a part or the whole of the coverage area of at least one of the base station and the base station subsystem that performs communication services in this coverage.

In the present disclosure, terms such as "mobile station (MS)", "user terminal", "user equipment (UE)", and "terminal" may be used interchangeably.

The mobile station may also be referred by those skilled in the art to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, client, or some other suitable term.

At least one of the base station and the mobile station may be referred to as a transmission device, a reception device, a communication device, or the like. Note that at least one of the base station and the mobile station may be a device mounted on a moving body, the moving body itself, or the like. The moving body may be a vehicle (for example, car, airplane, etc.), may be an unmanned moving body (for example, drone, self-driving car, etc.), or may be a robot (manned type or unmanned type). Note that at least one of the base station and the mobile station also includes a device that does not necessarily move during a communication operation. For example, at least one of the base station and the mobile station may be an IoT (Internet of Things) apparatus such as a sensor.

In addition, the base station in the present disclosure may be read as the user terminal. For example, the communication between the base station and the user terminal is replaced with communication between the plurality of terminals 20 (may be referred to as D2D (Device-to-Device), V2X (Vehicle-to-Everything), etc.), and each aspect/embodiment of the present disclosure may be applied to the replaced configuration. In this case, the terminal 20 may have the function of the base station 10 described above. In addition, the wording such as "up" and "down" may be read as a wording corresponding to inter-terminal communication (for example, "side") . For example, the uplink channel, the downlink channel and the like may be read as the side channel.

Similarly, the user terminal in the present disclosure may be read as the base station. In this case, the base station may have the function of the user terminal described above.

The terms "determining" and "deciding" as used in the present disclosure may encompass a wide variety of operations. For example, "determining" and "deciding" may include deeming that to perform judging, calculating, computing, processing, deriving, investigating, looking up or search or inquiry (for example, search in a table, a database, or another data structure), or ascertaining is to perform "determining" or "deciding." In addition, "determining" and "deciding" may include deeming that to perform receiving (for example, reception of information), transmitting (for example, transmission of information), input, output, or accessing (for example, accessing data in a memory) is to perform "determining" or "deciding." Further, "determining" and "deciding" may include deeming that to perform resolving, selecting, choosing, establishing, comparing, or the like is to perform "determining" or "deciding." That is, "determining" and "deciding" may include deeming that some operations are to perform "determining" or "deciding." In addition, "determining (deciding)" may be read as "assuming", "expecting", "considering", and the like.

The terms "connected," "coupled," or any derivative thereof mean any direct or indirect connection or coupling between two or more elements, and one or more intermediate elements may be present between two elements that are "connected" or "coupled" each other. The coupling or connection between the elements may be physical, logical, or a combination thereof. For example, "connection" may be read as "access". As used in the present disclosure, two elements can be considered to be "connected" or "coupled" each other by using at least one of one or more wires, cables and printed electrical connections, and by using, as some non-limiting and non-exhaustive examples, electromagnetic energy having wavelengths in the radio frequency domain, the microwave region and light (both visible and invisible) region.

The reference signal may be abbreviated as RS (Reference Signal), or may be referred to as a pilot depending on the applied standard.

As used in the present disclosure, the phrase "based on" does not mean "based only on," unless expressly specified otherwise. In other words, the phrase "based on" means both "based only on" and "based at least on."

Any reference to elements using designations such as "first", "second", and the like as used in the present disclosure does not generally limit the amount or order of those elements. These designations may be used in the present disclosure as a convenient way to distinguish between two or more elements. Thus, references to the first and second elements do not imply that only two elements may be employed or that the first element must precede the second element in any way.

The "means" in the configuration of each of the above units may be replaced with "unit", "circuit", "device", and the like.

Where the terms "include", "including" and derivatives thereof are used in the present disclosure, these terms is intended to be inclusive, as with the terms "comprising". Further, the term "or" as used in the present disclosure is not intended to be exclusive-or.

A radio frame may be composed of one or more frames in the time domain. Each of the one or more frames in the time domain may be referred to as a sub-frame. The sub-frame may also be composed of one or more slots in the time domain. The sub-frame may have a fixed time length (for example, 1 ms) that does not depend on numerology.

The numerology may be a communication parameter applied to at least one of transmission and reception of a signal or channel. The numerology may indicate, for example, at least one of a sub-carrier spacing (SCS), a bandwidth, a symbol length, a cyclic prefix length, a transmission time interval (TTI), the number of symbols per the TTI, a radio frame configuration, a specific filtering process performed by a transceiver in the frequency domain and a specific windowing process performed by the transceiver in the time domain.

The slot may be composed of one or more symbols (OFDM (Orthogonal Frequency Division Multiplexing) symbol, SC-FDMA (Single Carrier Frequency Division Multiple Access) symbol, etc.) in the time domain. The slot may be a time unit based on the numerology.

The slot may include multiple mini-slots . Each mini-slot may be composed of one or more symbols in the time domain. The mini-slot may also be referred to as a sub-slot. The mini-slot may be composed of fewer symbols than the slot. The PDSCH (or PUSCH) transmitted in a time unit larger than the mini-slot may be referred to as PDSCH (or PUSCH) mapping type A. The PDSCH (or PUSCH) transmitted using the mini-slot may be referred to as PDSCH (or PUSCH) mapping type B.

The radio frame, the sub-frame, the slot, the mini-slot, and the symbol all represent the time unit in transmitting signals. Each of the Radio frame, the sub-frames, the slot, the mini-slot, and the symbol may have different name corresponding to thereof.

For example, one sub-frame may be referred to as a transmission time interval (TTI), a plurality of consecutive sub-frames may be referred to as the TTI, and one slot or one mini-slot may be referred to as the TTI. That is, at least one of the sub-frame and the TTI may be a sub-frame (1ms) in existing LTE, may be a duration shorter than 1 ms (for example, 1-13 symbols), or may be a duration longer than 1 ms. Note that the unit representing the TTI may be referred to as a slot, a mini-slot, or the like instead of a sub-frame.

In the specification, the TTI means, for example, the minimum time unit of scheduling in wireless communication. For example, in the LTE system, the base station performs scheduling to allocate radio resources (a frequency bandwidth that can be used in each terminal 20, transmission power, etc.) to each terminal 20 in units of the TTI. Note that the definition of the TTI is not limited to thereof.

The TTI may be a transmission time unit of a channel-encoded data packet (transport block), code block, codeword, or the like, or may be a processing unit of scheduling, link adaptation, or the like. Note that when a TTI is given, the time interval (for example, the number of symbols) in which the transport blocks, the code blocks, the codewords, or the like are actually mapped may be shorter than the TTI.

Note that when one slot or one mini-slot is referred to as the TTI, one or more TTIs (that is, one or more slots or one or more mini-slots) may be the minimum time unit for scheduling. Further, the number of slots (the number of mini-slots) that constitutes the minimum time unit of the scheduling may be controlled.

The TTI having a time length of 1 ms may be referred to as a regular TTI (TTI in LTE Rel. 8-12), a normal TTI, a long TTI, a regular sub-frame, a normal sub-frame, a long sub-frame, a slot, or the like. The TTI shorter than the regular TTI may be referred to as a shortened TTI, a short TTI, a partial or fractional TTI, a shortened sub-frame, a short sub-frame, a mini-slot, a sub-slot, a slot, or the like.

Note that the long TTI (for example, the regular TTI, the sub-frame, etc.) may be read as a TTI having a time length of more than 1 ms, and the short TTI (for example, the shortened TTI, etc.) may be read as a TTI having a TTI length less than the TTI length of the long TTI and the TTI length equal more than 1 ms.

The resource block (RB) is a resource allocation unit in the time domain and the frequency domain, and may include one or more consecutive sub-carriers in the frequency domain. The number of sub-carriers included in the RB may be the same regardless of the numerology, and may be 12, for example. The number of sub-carriers included in the RB may be determined based on the numerology.

Further, the time domain of the RB may include one or more symbols, and may be one slot, one mini-slot, one sub-frame, or one TTI in length. One TTI, one sub-frame, or the like may be each configured with one or more resource blocks.

Note that one or more RBs may be referred to as a physical resource block (PRB: Physical RB), a sub-carrier group (SCG: Sub-Carrier Group), a resource element group (REG: Resource Element Group), a PRB pair, an RB pair, and the like.

Further, the resource block may be composed of one or more resource elements (RE: Resource Element). For example, one RE may be a radio resource area of one sub-carrier and one symbol.

A bandwidth part (BWP: Bandwidth Part) (may be referred to as a partial bandwidth) may represent a subset of consecutive common RBs (common resource blocks) for a certain numerology in a certain carrier. Here, the common RB may be specified by the index of the RB based on the common reference point of the carrier. The PRB may be defined in a BWP and numbered within that BWP.

The BWP may include BWP for UL (UL BWP) and BWP for DL (DL BWP). One or more BWPs may be configured in one carrier for the UE.

At least one of the configured BWPs may be active, and the UE does not have to assume to send and receive a given signal/channel outside the active BWP. Note that "cell", "carrier", and the like in the present disclosure may be read as "BWP".

The above-described structure of the radio frame, the sub-frame, the slot, the mini-slot, the symbol, and the like is just an example. For example, the number of sub-frames included in the radio frame, the number of slots per the sub-frame or the radio frame, the number of mini-slots included in the slot, the number of symbols and RBs included in the slot or the mini-slot, the number of sub-carrier included in the RB, and the number of symbols in the TTI, the symbol length, the cyclic prefix (CP: Cyclic Prefix) length, and the like can be variously changed.

In the present disclosure, if translations add articles such as "a," "an," and "the" in English, the present disclosure may include that nouns following these articles are plural.

In the present disclosure, the sentence "A and B are different" may mean "A and B are different from each other". Note that the sentence may mean that "A and B are each different from C". The terms "remove", "coupled" and the like may be construed as "different" as well.

Each aspect/embodiment described in the present disclosure may be used alone, in combination, or may be switched and used in accordance with execution. Further, the notification (indicating) of the predetermined information (for example, the notification of "being X") is not limited to be performed explicitly, and may be performed implicitly (for example, the notification of the predetermined information is not performed).

Note that, in the present disclosure, the MsgA is an example of a message used for the 2-step random access procedure. The PRACH is an example of a physical random access channel. The PUSCH is an example of a physical uplink shared channel. The MsgA-PRACH is an example of a first message. The MsgA-PUSCH is an example of a second message.

While the present disclosure has been described above in detail, it is obvious to those skilled in the art that the present disclosure is not limited to the embodiments described in the present disclosure. The present disclosure can be implemented as modifications and alterations without departing from the spirit and scope of the present disclosure defined in claims set forth below. Accordingly, the description of the present disclosure is intended to be exemplary and does not have any restrictive meaning to the present disclosure.

### EXPLANATIONS OF LETTERS OR NUMERALS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 1001: Processor
- 1002: Storage unit
- 1003: Auxiliary storage unit
- 1004: Communication unit
- 1005: Input unit
- 1006: Output unit

## Claims

1. A terminal comprising:
a transmission unit that transmits a first message and a second message in a 2-step random access procedure, the first message being transmitted via a physical random access channel and the second message being transmitted via a physical uplink shared channel; and
a control unit that determines a power control to be applied to the first message and the second message, according to a control based on a prioritization rule of power allocation applied to the first message or the second message,
wherein the transmission unit retransmits the first message and the second message by applying the determined power control to the first message and the second message.

2. The terminal according to claim 1,
wherein the control based on the prioritization rule of power allocation is a control for stopping transmission or transmitting with reduced power,
wherein the power control is a control for suspending a power ramping counter.

3. The terminal according to claim 2,
wherein the control unit determines a power control to be applied to the first message and the second message, according to the control based on the prioritization rule of power allocation applied to the first message.

4. The terminal according to claim 2,
wherein the control unit determines a power control to be applied to the first message and the second message, according to the control based on the prioritization rule of power allocation applied to the second message.

5. The terminal according to claim 2,
wherein the control unit determines a power control to be applied to the first message, according to the control based on the prioritization rule of power allocation applied to the first message, and determines a power control to be applied to the second message, according to the control based on the prioritization rule of power allocation applied to the second message.

6. A communication method comprising:
transmitting, by a terminal, a first message and a second message in a 2-step random access procedure, the first message being transmitted via a physical random access channel and the second message being transmitted via a physical uplink shared channel;
determining, by the terminal, a power control to be applied to the first message and the second message, according to a control based on a prioritization rule of power allocation applied to the first message or the second message,
wherein the transmitting comprises retransmitting the first message and the second message by applying the determined power control to the first message and the second message.
